# EUROPÄISCHE PATENTSCHRIFT

(11) **EP 1 880 367 B1**
(45) Veröffentlichungstag und Bekanntmachung des Hinweises auf die Patenterteilung: **13.07.2011**
(21) Anmeldenummer: 06755053.3
(22) Anmeldetag: 05.05.2006
(51) Int. Cl.: G07C 5/08, G06K 7/00, G06F 21/00, G07F 7/10, H04L 9/32

(54) **DATENÜBERTRAGUNG ZWISCHEN MODULEN**
DATA TRANSFER BETWEEN MODULES
TRANSMISSION DE DONNEES ENTRE MODULES

(30) Priorität: 12.05.2005 DE 102005022112
(43) Veröffentlichungstag der Anmeldung: 23.01.2008
(73) Patentinhaber: Continental Automotive GmbH, 30165 Hannover (DE)
(72) Erfinder: LINDINGER, Andreas, 78658 Flözlingen (DE); NÄTHER, Horst, 78052 Villingen-Schwenningen (DE)
(86) Internationale Anmeldenummer: PCT/EP2006/062100
(87) Internationale Veröffentlichungsnummer: WO 2006/120170

(56) Entgegenhaltungen:
- FR-A- 2 697 929
- FR-A- 2 861 202
- GB-A- 2 404 065
- US-A1- 2004 093 507

## Beschreibung

Die Erfindung betrifft ein Verfahren zur Übertragung von Daten zwischen einem ersten Modul und einem zweiten Modul, insbesondere zwischen einem Fahrtschreiber und einem an diesen anschließbaren Datenträger, wobei das zweite Modul einen Datenspeicher aufweist, aus welchem Daten an das erste Modul entweder nach einem Authentisierungsvorgang gesichert oder ungesichert übertragbar sind. Daneben ist eine Anordnung mit einem ersten Modul und einem zweiten Modul bzw. einem Fahrtschreiber und einem anschließbaren Datenträger Gegenstand der Erfindung, wobei die Anordnung zur Ausführung des vorgenannten Verfahrens ausgebildet ist.

In der FR 2 697 929 A1 ist ein Protokoll für eine gesicherte Datenübertragung zwischen einer Übertragungsvorrichtung und einem portablen Gegenstand offenbart, zum Beispiel eines Mautsystems. Der portable Gegenstand ist insbesondere eine Karte mit einem Datenspeicher und einem Mikroprozessor. Nutzdaten werden zusammen mit einer zugehörigen Signatur von dem portablen Gegenstand an die Übertragungsvorrichtung übertragen. Die Übertragungsvorrichtung überprüft die übertragenen Nutzdaten anhand der Signatur und aktualisiert die Nutzdaten und die Signatur. Die aktualisierten Nutzdaten und die aktualisierte Signatur werden verschlüsselt auf den portablen Gegenstand übertragen und dort entschlüsselt und überprüft.

In der US 2004/0093507 A1 ist ein Überprüfen einer Integrität eines Softwarekodes offenbart, der durch einen integrierten Prozessor ausführbar ist. Der Softwarekode ist zusammen mit einem Authentisierungskode oder einer Signatur in einem externen Datenspeicher gespeichert. Zum Überprüfen der Integrität des Softwarekodes wird der Softwarekode und der zugehörige Authentisierungskode oder die zugehörige Signatur gelesen. Der Softwarekode wird durch den integrierten Prozessor ausgeführt und parallel dazu, in einer gesonderten Schaltung, die Integrität des Softwarekodes anhand des Authentisierungskodes oder der Signatur überprüft.

In der FR 2 861 202 A1 ist ein Kontrollsystem für Fahrzeuginformationen offenbart. Auf einer Karte gespeicherte Daten und eine zugehörige Signatur werden durch eine Erfassungsvorrichtung gelesen. Die Signatur ist ein verschlüsselter Hash-Kode der Daten. Die Daten werden entweder unverschlüsselt oder verschlüsselt zu der Erfassungsvorrichtung übertragen. Die Signatur und gegebenenfalls die Daten werden durch die Erfassungsvorrichtung entschlüsselt und zu den unverschlüsselten Daten wird ein Hash-Kode erzeugt, der zur Überprüfung mit der entschlüsselten Signatur verglichen wird.

In der GB 2 404 065 A ist eine Methode zum Sichern von biometrischen und weiteren Daten offenbart. Die biometrischen und weiteren Daten sind zusammen mit einer digitalen Signatur und einem digitalen Zertifikat, das einen öffentlichen Schlüssel enthält, auf einem transportablen Gerät für Identifikationszwecke gespeichert und werden von einem Lesegerät gelesen. Zu den gelesenen biometrischen und weiteren Daten wird ein Hash-Kode ermittelt. Dieser wird mit einem aus der digitalen Signatur ermittelten Hash-Kode verglichen.

Bevorzugtes Anwendungsgebiet der Erfindung ist der Betrieb von Fahrtschreibern bzw. Tachographen, bei welchen stets ein erstes Modul bzw. der Fahrtschreiber in dem Nutzfahrzeug fest installiert ist und ein zweites Modul bzw. der meist als Datenkarte ausgebildete Datenträger dem Führer des Nutzfahrzeuges zugeordnet ist und in eine Daten übertragende Verbindung mit dem Fahrtschreiber gebracht werden kann. Die personenbezogenen Betriebsdaten werden beim Einstecken der Datenkarte in den Fahrtschreiber von einem Speicher der Datenkarte zu einem Teil ausgelesen und von dem Fahrtschreiber einer ersten Auswertung unterzogen. Hierbei wird unter anderem festgestellt, wie lange der Fahrzeugführer unter Berücksichtigung der kumulativen Lenkzeitunterbrechung lenken darf. Nach Stecken der Karte bzw. Herstellung der Daten übertragenden Verbindung sind Eingaben des Fahrzeugführers an eine Eingabevorrichtung des Fahrtschreibers zur Aufnahme der Arbeit erforderlich. Hierzu zählen unter anderem das Land des aktuellen Standortes und die beabsichtigte auszuübende Tätigkeit des Karteninhabers. Nach der EWG-Verordnung Nr. 3821/85 ist die Datenübertragung zwischen dem ersten Modul und dem zweiten Modul bzw. dem Fahrtschreiber und der Datenkarte gesichert durchzuführen. Hierzu ist eingangs der Datenübertragung eine Authentisierung erforderlich, während derer unter anderem ein Sitzungsschlüssel erzeugt wird, mittels dessen die Übertragung von Daten abgesichert wird. Der Zeitaufwand für den vollständigen Authentisierungsvorgang übersteigt jedoch unter bestimmten Umständen eine vernünftigerweise zu akzeptierende Dauer.

Ausgehend von diesem Problem liegt der Erfindung die Aufgabe zugrunde, den Zeitraum vom Herstellen einer Daten übertragenden Verbindung zwischen dem ersten Modul und dem zweiten Modul ohne Einbuße an Sicherheit gegen etwaige Manipulationen bis zur Aufnahme eines auf der Datenübertragung basierenden Prozesses auf ein vernünftiges Maß zu verkürzen.

Hierzu schlägt die Erfindung ein Verfahren mit den Merkmalen des Anspruchs 1 und eine Anordnung mit den Merkmalen des Anspruchs 12 vor. Die jeweils rückbezogenen Unteransprüche beinhalten vorteilhafte Weiterbildungen der Erfindung.

Der besondere Vorteil der Erfindung liegt darin, dass auf Grund des zunächst stattfindenden ungesicherten Lesens bzw. Übertragens von Daten von dem zweiten Modul bzw. der Datenkarte des Fahrtschreibers auf das erste Modul bzw. den Fahrtschreiber der zeitliche Aufwand des Authentisierens bzw. der Absicherung der Datenübertragung vorab eingespart werden kann. Dies ist insbesondere dann von besonderem Vorteil, wenn erfindungsgemäß die zu übertragenden Daten für einen ersten Prozess benutzt werden. In diesem Fall ist die Datenübertragung also zeitkritisch für den Beginn des ersten Prozesses bzw. den Gesamtvorgang. Am konkreten Beispiel des Fahrtschreibers kann der Fahrzeugführer mit seiner Eingabe bereits früher beginnen ohne auf die Ergebnisse des Authentisierungsvorganges warten zu müssen. Es kommt dennoch nicht zu einer Einbuße an Sicherheit gegen Manipulation, da im Nachgang die Authentisierung und das gesicherte Übertragen von Daten nachgeholt werden und ein Vergleich der gesichert übertragenen Daten mit den ungesichert übertragenen Daten erfolgt. Fällt dieser Vergleich negativ aus bzw. ist eine Differenz feststellbar, werden die Ergebnisse aus dem ersten Prozess verworfen. Am konkreten Beispiel des Fahrtschreibers bedeutet das Verwerfen, dass die Eingaben des Fahrzeugführers verworfen werden. Darüber hinaus kann mit Vorteil die Karte von dem Fahrtschreiber nicht akzeptiert werden. Das Authentisieren und das Vergleichen läuft zweckmäßig von dem Prozessor gesteuert in Hintergrund ab, so dass im Sinne eines Multitaskings das Gerät einerseits beispielsweise Eingaben des Benutzers akzeptiert und im konkreten Fall des Fahrtschreibers auch mit der Registrierung von Betriebsdaten, die von einem im Betrieb des Nutzfahrzeuges im Getriebe angeordneten Sensor übermittelt werden, durchführt. Die provisorisch bzw. ungesichert eingelesenen Daten werden sinnvoll in einem Speicher des ersten Moduls bzw. des Fahrtschreibers abgelegt und während oder nach dem gesicherten Auslesen der Daten mit den letzteren verglichen.

Eine vorteilhafte Weiterbildung der Erfindung sieht vor, dass die ungesichert eingelesenen Daten eine Eingabe von zusätzlichen Daten mittels eines dritten Moduls bzw. einer Eingabevorrichtung des Fahrtschreibers während des ersten Prozesses unterstützen. Beispielsweise kann hierbei eine Sprachkennung aus dem zweiten Modul ausgelesen werden, die angibt, welche Sprache auf einer Anzeigeeinheit des ersten Moduls zur Darstellung von Schrift bzw. Klartext benutzt wird.

Die Zeitersparnis bei dem erfindungsgemäßen Verfahren bzw. einer Benutzung der erfindungsgemäßen Anordnung ist besonders hoch, wenn die Daten in einem Datenspeicher des zweiten Moduls unverschlüsselt abgelegt sind und von dem ersten Modul auslesbar sind. Dieser Vorgang bzw. eine derartige Ausbildung der Anordnung muss keine Einbuße an Sicherheit bedeuten, wenn für die gesicherte Übertragung während des Authentisierungsvorganges ein Schlüssel zur gesicherten Datenübertragung von dem ersten Modul erzeugt wird, unter dessen Einbeziehung aus den übertragenen Daten von dem zweiten Modul mindestens ein Kontrolldatum erzeugt wird, so dass das erste Modul aus einer Auswertung des mit den zu übermittelnden Daten übersendeten Kontrolldatums und den übertragenen Daten die Authentizität der übertragenen Daten ermitteln kann. Die Abhängigkeit des Kontrolldatums einerseits von dem erzeugten geheimen Schlüssel und andererseits von den sonstigen übertragenen Daten schließt eine unbemerkte Manipulation sicher aus.

Erfindungsgemäß kann nur die Authentisierung oder nur die gesicherte Übertragung von dem Prozessor gesteuert im Hintergrund erfolgen, was bereits zu erheblichen Zeiteinsparungen führt. Besonders groß werden die erfindungsgemäßen Vorteile, wenn sowohl die Authentisierung als auch die Übertragung im Hintergrund stattfinden.

Obgleich eine Ausbildung der erfindungsgemäßen gesicherten Übertragung und Ermittlung der Authentizität der übertragenen Daten als Hardware-Bauelement einen verhältnismäßig geringen Rechenaufwand und gegenüber der Software-Alternative im Betrieb weniger zeitintensiv ist, ist aus Kostengründen eine Implementierung der Vorgänge des Authentisierens und der Ermittlung der Authentizität der übertragenen Daten als ausführbare Programme, die veränderbar zumindest teilweise in einem Speicher des ersten Moduls abgelegt sind, zu bevorzugen. Hierbei kommen die Vorteile der erfindungsgemäßen eingangs des Vorganges der Datenübertragung stattfindenden Beschleunigung besonders zum tragen. Damit die ungesicherte Übertragung während des Normalbetriebes nicht unbemerkt zur Regel wird, ist es sinnvoll, wenn das System diesen Zustand normalerweise als Fehler meldet. Derartige Fehlermeldungen können mit Vorteil unterdrückt werden, während des ungesicherten Betriebes von Daten und der Verarbeitung dieser Daten, insbesondere im zeitlichen Umfeld des Anschließens des ersten Moduls an das zweite Modul bzw. eingangs der Datenübertragung zwischen dem Fahrtschreiber und dem Datenträger. Im Folgenden ist die Erfindung anhand eines speziellen Ausführungsbeispiels zur Verdeutlichung näher erläutert. Es zeigt:

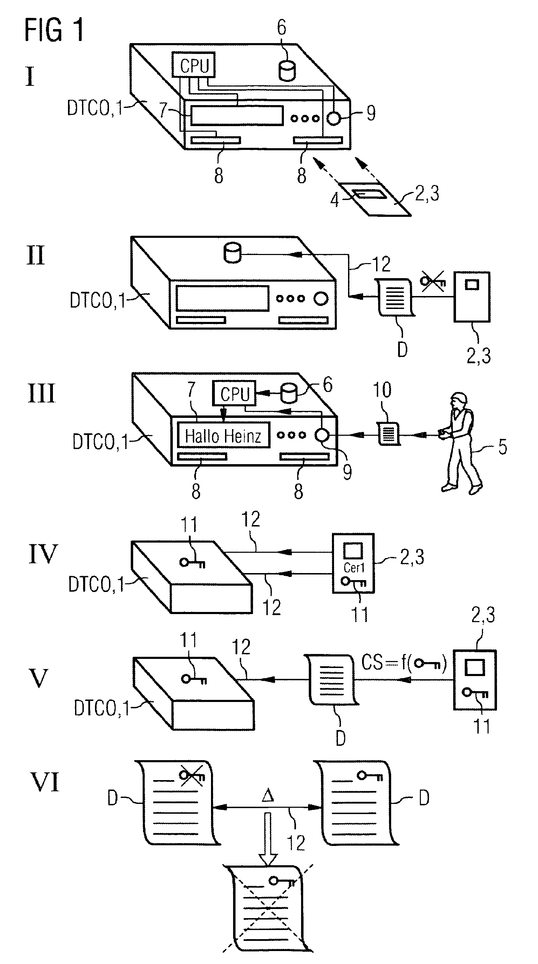

- Figur 1: Schritte 1 bis 6 eines erfindungsgemäßen Datenüber- tragungsverfahrens mit einer erfindungsgemäßen An- ordnung.

In Figur 1 sind Schritte I bis VI eines erfindungsgemäßen Verfahrens dargestellt. In Figur 1 ist ein erstes Modul 1 bzw. ein Fahrtschreiber DTCO im Zusammenwirken mit einem zweiten Modul 2 bzw. einem als Datenkarte ausgebildeten Datenträger 3 dargestellt. Das zweite Modul 2 weist einen Datenspeicher 4 auf, welcher personen-bezogene Betriebsdaten für einen Benutzer 5 speichert. Der Fahrtschreiber DTCO weist einen Prozessor CPU auf, der mit einem Datenspeicher 6 des Fahrtschreibers DTCO in Daten übertragender Verbindung steht. Daneben ist der Prozessor CPU zur Ansteuerung mit einer Anzeige 7, zwei Datenkartenaufnahmen 8 und einer Eingabevorrichtung 9 verbunden. Der Datenträger 3 lässt sich in die Datenkartenaufnahme 8 einführen gemäß dem abgebildeten Schritt I, so dass er von außen unzugänglich ist. Sobald der Datenträger 3 in dem Fahrtschreiber DTCO mit diesem in eine Daten übertragende Verbindung 12 eintritt, werden Daten D von dem Datenträger 3 in den Datenspeicher 6 ungesichert übertragen.

Während des anschließend dargestellten Schrittes III gibt der Benutzer mittels der Eingabevorrichtung 9 Eingabedaten 10 ein, unterstützt von der Anzeige 7, auf der unter Verwendung der während des Schrittes II übertragenen Daten D Vorgaben zu der Eingabe angezeigt werden. Dieser erste Prozess (III) wird unter Zugriff auf den Datenspeicher 6 von dem Prozessor CPU gesteuert.

Mit Eingabe der Eingabedaten 10 kann der Benutzer 5 in dem konkreten Ausführungsbeispiel seine Arbeit beginnen bzw. den Fahrbetrieb aufnehmen, und der Fahrtschreiber DTCO kann die Registrierung der Betriebsdaten personenspezifisch beginnen.

Der mit IV bezeichnete Schritt ist ein Authentisierungsvorgang, während dessen ein Schlüssel 11 zur Sicherung der Datenübertragung zwischen dem Fahrtschreiber DTCO und dem Datenträger 3 erzeugt wird. Dieser Vorgang läuft ebenso wie der nachfolgende im Hintergrund des Multitasking-fähigen Fahrtschreibers DTCO ab. Während des anschließenden Schrittes V findet eine mittels des Schlüssels 11 gesicherte Übertragung der Daten D von dem Datenträger 3 auf den Fahrtschreiber DTCO statt. Die Sicherung der Übertragung erfolgt in der Weise, dass unverschlüsselte Daten D gemeinsam mit einem Kontrolldatum CS übertragen werden, wobei das Kontrolldatum CS sowohl als von dem Schlüssel 11 sowie auch von den Daten D abhängig erzeugt ist. Eine Auswertung des Kontrolldatums CS durch den Fahrtschreiber DTCO unter Berücksichtigung des Schlüssels 11 und der Daten D zeigt, ob die übermittelten Daten D authentisch sind oder eine Manipulation vorliegt. Wird die Authentizität bejaht, gilt die gesicherte Übertragung der Daten D als erfolgreich. Während des anschließenden Schrittes VI werden die erfolgreich gesichert übertragenen Daten D mit den ungesichert übertragenen Daten D, die zwischenzeitlich in dem Speicher 6 des Fahrtschreibers DTCO abgelegt wurden, verglichen. Wird eine Differenz Δ festgestellt, werden die Eingabedaten 10 verworfen, und der Datenträger 3 bzw. die Datenkarte wird abgelehnt.

## Patentansprüche

1. Verfahren zur Übertragung von Daten (D) zwischen einem ersten Modul (1) und einem zweiten Modul (2), insbesondere zwischen einem Fahrtschreiber (DTCO) und einem an diesen anschließbaren Datenträger (3),
wobei das zweite Modul einen Datenspeicher (4) aufweist, aus welchem Daten (D) an das erste Modul (1) entweder nach einem Authentisierungsvorgang (IV) gesichert oder ungesichert übertragbar sind,
wobei nach dem Anschluss des zweiten Moduls (2) an das erste Modul (1) zunächst Daten (D) ungesichert übertragen werden, die mittels eines Prozessors (CPU) des ersten Moduls (1) für einen ersten Prozess (III) benutzt werden,
wobei nach Beginn der ungesicherten Übertragung eine nach dem Authentisierungsvorgang (IV) eine gesicherte Übertragung der Daten (D) von dem zweiten Modul (2) auf das erste Modul (1) erfolgt,
wobei anschließend die ungesichert übertragenen Daten (D) mit den gesichert übertragenen Daten (D) verglichen werden und bei einem Unterschied zwischen den gesichert und den ungesichert übertragenen Daten (D) Ergebnisse aus dem ersten Prozess (III) verworfen werden.

2. Verfahren nach Anspruch 1, **dadurch gekennzeichnet, dass** die ungesichert übertragenen Daten (D) für eine Eingabe von zusätzlichen Eingabedaten (10) mittels eines dritten Moduls (Eingabevorrichtung 9) während des ersten Prozesses (III) verwendet werden.

3. Verfahren nach Anspruch 2, **dadurch gekennzeichnet, dass** das dritte Modul als Eingabevorrichtung (9) ausgebildet ist, an der ein Benutzer (5) Eingaben machen kann.

4. Verfahren nach Anspruch 1, **dadurch gekennzeichnet, dass** die Daten (D) in einem Datenspeicher (4) des zweiten Moduls (2) unverschlüsselt abgelegt sind und von dem ersten Modul (1) auslesbar sind.

5. Verfahren nach Anspruch 1, **dadurch gekennzeichnet, dass** die ungesichert übertragenen Daten (D) in einem ersten Bereich eines Speichers (6) des ersten Moduls (1) abgespeichert werden.

6. Verfahren nach Anspruch 1, **dadurch gekennzeichnet, dass** für die gesicherte Übertragung während des Authentisierungsvorgangs (IV) ein Schlüssel (11) zur gesicherten Datenübertragung erzeugt wird, unter dessen Einbeziehung aus den übertragenen Daten (D) von dem zweiten Modul (2) mindestens ein Kontrolldatum (CS) erzeugt wird, so dass das erste Modul (1) aus einer Auswertung des Kontrolldatums (CS) und der übertragenen Daten (D) die Authentizität der Daten (D) ermitteln kann.

7. Verfahren nach Anspruch 6, **dadurch gekennzeichnet, dass** der Schlüssel (11) zur gesicherten Datenübertragung von dem ersten Modul (1) erzeugt wird.

8. Verfahren nach Anspruch 1, **dadurch gekennzeichnet, dass** der Authentisierungsvorgang (IV) als Prozess im Hintergrund abläuft.

9. Verfahren nach Anspruch 1, **dadurch gekennzeichnet, dass** die gesicherte Übertragung und die Ermittlung der Authentizität der übertragenen Daten (D) als Prozesse im Hintergrund erfolgen.

10. Verfahren nach Anspruch 1, **dadurch gekennzeichnet, dass** der Authentisierungsvorgang (IV) und derjenige der Ermittlung der Authentizität der übertragenen Daten (D) als ausführbare Programme veränderbar zumindest teilweise in einem Speicher (6) des ersten Moduls (1) abgelegt sind.

11. Verfahren nach Anspruch 1, **dadurch gekennzeichnet, dass** während des ungesicherten Übertragens von Daten (D) und der Verarbeitung dieser Daten (D) bestimmte Fehlermeldungen des Systems unterdrückt werden, die auf die ungesicherte Übertragung zurückzuführen sind.

12. Anordnung mit einem ersten Modul und einem zweiten Modul, insbesondere mit einem Fahrtschreiber (DTCO) und einem anschließbaren Datenträger (3),
wobei zwischen dem ersten Modul (1) und dem zweiten Modul (2) Daten (D) übertragen werden,
wobei die Anordnung derart ausgebildet ist,
- dass das zweite Modul (2) einen Datenspeicher (4) aufweist,
- dass Daten (D) von dem zweiten Modul (2) an das erste Modul (1) entweder nach einem Authentisierungsvorgang (IV) gesichert oder ungesichert übertragbar sind,
- dass nach dem Anschluss des zweiten Moduls (2) an das erste Modul (1) zunächst Daten (D) ungesichert übertragen werden, die mittels eines Prozessors (CPU) des ersten Moduls (1) für einen ersten Prozess (III) benutzt werden,
- dass nach Beginn der ungesicherten Übertragung eine nach dem Authentisierungsvorgang (IV) gesicherte Übertragung der Daten (D) von dem zweiten Modul (2) auf das erste Modul (1) erfolgt,
- dass die ungesichert übertragenen Daten (D) mit den gesichert übertragenen Daten (D) verglichen werden und bei einem ermittelten Unterschied zwischen den gesichert und den ungesichert übertragenen Daten (D) Ergebnisse aus dem ersten Prozess (III) verworfen werden.

13. Anordnung nach Anspruch 12, **dadurch gekennzeichnet, dass** sie derart ausgebildet ist, dass mittels der ungesichert gelesenen Daten (D) eine Eingabe von zusätzlichen Daten (D) mittels eines dritten Moduls (Eingabevorrichtung 9) während des ersten Prozesses (III) unterstützt wird.

14. Anordnung nach Anspruch 13, **dadurch gekennzeichnet, dass** das dritte Modul als Eingabevorrichtung (9) ausgebildet ist, an der ein Benutzer (5) Eingaben machen kann.

15. Anordnung nach Anspruch 12, **dadurch gekennzeichnet, dass** das zweite Modul (2) einen Datenspeicher (4) aufweist, in dem die Daten (D) unverschlüsselt abgelegt sind und die Anordnung derart ausgebildet ist, dass die Daten (D) von dem ersten Modul (1) auslesbar sind.

16. Anordnung nach Anspruch 12, **dadurch gekennzeichnet, dass** das erste Modul (1) einen Speicher (6) mit einem ersten Bereich aufweist, und die Anordnung derart ausgebildet ist, dass in dem ersten Bereich die ungesichert übertragenen Daten (D) abgespeichert werden.

17. Anordnung nach Anspruch 12, **dadurch gekennzeichnet, dass** sie derart ausgebildet ist, dass für die gesicherte Übertragung während des Authentisierungsvorgangs (IV) ein Schlüssel (11) zur gesicherten Datenübertragung von dem ersten Modul (1) erzeugt wird, unter dessen Einbeziehung aus den übertragenen Daten (D) von dem zweiten Modul (2) mindestens ein Kontrolldatum (CS) erzeugt wird, so dass das erste Modul (1) aus einer Auswertung des Kontrolldatum (CS) und der übertragenen Daten (D) die Authentizität der Daten (D) ermitteln kann.

18. Anordnung nach Anspruch 12, **dadurch gekennzeichnet, dass** sie derart ausgebildet ist, dass die Authentisierung als Prozess im Hintergrund erfolgt.

19. Anordnung nach Anspruch 12, **dadurch gekennzeichnet, dass** sie derart ausgebildet ist, dass die gesicherte Übertragung und die Ermittlung der Authentizität der übertragenen Daten (D) als Prozesse im Hintergrund erfolgen.

20. Anordnung nach Anspruch 12, **dadurch gekennzeichnet, dass** sie derart ausgebildet ist, dass der Vorgang der Authentisierung und derjenige der Ermittlung der Authentizität der übertragenen Daten als ausführbares Programm veränderbar zumindest teilweise in einem Speicher (6) des ersten Moduls (1) abgelegt sind.

21. Anordnung nach Anspruch 12, **dadurch gekennzeichnet, dass** sie derart ausgebildet ist, dass während des ungesicherten Übertragens von Daten (D) und der Verarbeitung dieser Daten (D) bestimmte Fehlermeldungen des Systems unterdrückt werden, die auf die ungesicherte Übertragung zurückzuführen sind.

## Claims

1. A method for transmitting data (D) between a first module (1) and a second module (2), particularly between a tachograph (DTCO) and a data storage medium (3) which can be connected thereto,
where the second module has a data store (4) from which it is possible to transmit data (D) to the first module (1) either in secure form following an authentication operation (IV) or in nonsecure form,
where connection of the second module (2) to the first module (1) is first of all followed by the transmission of data (D) in nonsecure form which are used by means of a processor (CPU) in the first module (1) for a first process (III),
where the start of the nonsecure transmission is followed by a secure transmission of the data (D), following the authentication operation (IV), from the second module (2) to the first module (1),
the data (D) transmitted in nonsecure form then being compared with the data (D) transmitted in secure form and results from the first process (III) being discarded if there is a difference between the data (D) transmitted in secure form and the data (D) transmitted in nonsecure form.

2. Method according to Claim 1, **characterized in that** the data (D) transmitted in nonsecure form are used for input of additional input data (10) by means of a third module (input apparatus 9) during the first process (III).

3. Method according to Claim 2, **characterized in that** the third module is in the form of an input apparatus (9) which a user (5) can use to make inputs.

4. Method according to Claim 1, **characterized in that** the data (D) are stored in unencrypted form in a data store (4) in the second module (2) and can be read by the first module (1).

5. Method according to Claim 1, **characterized in that** the data (D) transmitted in nonsecure form are stored in a first area of a memory (6) in the first module (1).

6. Method according to Claim 1, **characterized in that** for the secure transmission a key (11) for secure data transmission is produced during the authentication operation (IV) and can be used by the second module (2) to produce at least one control data item (CS) from the transmitted data (D), so that the first module (1) can ascertain the authenticity of the data (D) from an evaluation of the control data item (CS) and the transmitted data (D).

7. Method according to Claim 6, **characterized in that** the key (11) for secure data transmission is produced by the first module (1).

8. Method according to Claim 1, **characterized in that** the authentication operation (IV) runs as a process in the background.

9. Method according to Claim 1, **characterized in that** the secure transmission and the ascertainment of the authenticity of the transmitted data (D) take place as processes in the background.

10. Method according to Claim 1, **characterized in that** the authentication operation (IV) and the operation of ascertaining the authenticity of the transmitted data (D) are stored at least in part in a memory (6) in the first module (1) as executable programs in alterable form.

11. Method according to Claim 1, **characterized in that** during the nonsecure transmission of data (D) and the processing of these data (D) certain error messages in the system which can be attributed to the nonsecure transmission are suppressed.

12. Arrangement having a first module and a second module, particularly having a tachograph (DTCO) and a connectable data storage medium (3),
where data (D) are transmitted between the first module (1) and the second module (2),
where the arrangement is in a form such
- that the second module (2) has a data store (4),
- that data (D) can be transmitted from the second module (2) to the first module (1) either in secure form after an authentication operation (IV) or in nonsecure form,
- that connection of the second module (2) to the first module (1) is first of all followed by the transmission of data (D) in nonsecure form which are used by means of a processor (CPU) in the first module (1) for a first process (III),
- that the start of the nonsecure transmission is followed by a secure transmission of the data (D), following the authentication operation (IV), from the second module (2) to the first module (1),
- the data (D) transmitted in nonsecure form being compared with the data (D) transmitted in secure form and results from the first process (III) being discarded if a difference is ascertained between the data (D) transmitted in secure form and the data (D) transmitted in nonsecure form.

13. Arrangement according to Claim 12, **characterized in that** it is in a form such that the data (D) read in nonsecure form are used to support input of additional data (D) by means of a third module (input apparatus 9) during the first process (III).

14. Arrangement according to Claim 13, **characterized in that** the third module is in the form of an input apparatus (9) which a user (5) can use to make inputs.

15. Arrangement according to Claim 12, **characterized in that** the second module (2) has a data store (4) which stores the data (D) in unencrypted form, and the arrangement is in a form such that the data (D) can be read by the first module (1).

16. Arrangement according to Claim 12, **characterized in that** the first module (1) has a memory (6) with a first area, and the arrangement is in a form such that the first area is used to store the data (D) transmitted in nonsecure form.

17. Arrangement according to Claim 12, **characterized in that** it is in a form such that for the secure transmission a key (11) for secure data transmission is produced by the first module (1) during the authentication operation (IV) and can be used by the second module (2) to produce at least one control data item (CS) from the transmitted data (D), so that the first module (1) can ascertain the authenticity of the data (D) from an evaluation of the control data item (CS) and the transmitted data (D).

18. Arrangement according to Claim 12, **characterized in that** it is in a form such that the authentication takes place as a process in the background.

19. Arrangement according to Claim 12, **characterized in that** it is in a form such that the secure transmission and the ascertainment of the authenticity of the transmitted data (D) take place as processes in the background.

20. Arrangement according to Claim 12, **characterized in that** it is in a form such that the operation of authentication and the operation of ascertaining the authenticity of the transmitted data (D) are stored at least in part in a memory (6) in the first module (1) as an executable program in alterable form.

21. Arrangement according to Claim 12, **characterized in that** it is in a form such that during the nonsecure transmission of data (D) and the processing of these data (D) certain error messages in the system which can be attributed to the nonsecure transmission are suppressed.

## Revendications

1. Procédé de transmission de données (D), entre un premier module (1) et un deuxième module (2), notamment entre un enregistreur (DTCO) de marche et un support (3) de données qui peut être raccordé à celui-ci,
dans lequel le deuxième module comporte une mémoire (4) de données à partir de laquelle des données (D) peuvent être transmises au premier module (1) soit sécurisées après une opération (IV) d'authentification, soit non sécurisées,
dans lequel, après le raccordement du deuxième module (2) au premier module (1), sont transmises d'abord, d'une manière non sécurisées, des données (D) qui sont utilisées au moyen d'un processeur (CPU) du premier module (1) pour un premier processus (III),
dans lequel, après le début de la transmission non sécurisée, une transmission des données (D) sécurisée suivant l'opération (IV) d'authentification a lieu du deuxième module (2) au premier module (1),
dans lequel ensuite les données (D) transmises de manière non sécurisée sont comparées aux données (D) transmises de manière sécurisée et, s'il y a une différence entre les données (D) transmises d'une manière sécurisée et d'une manière non sécurisée, les résultats provenant du premier processus (III) sont rejetés.

2. Procédé suivant la revendication 1, **caractérisé en ce que** les données (D) transmises d'une manière non sécurisée sont utilisées pour une entrée de données (10) d'entrée supplémentaires au moyen d'un troisième module (dispositif 9 d'entrée) pendant le premier processus (III).

3. Procédé suivant la revendication 2, **caractérisé en ce que** le troisième module est constitué sous la forme d'un dispositif (9) d'entrée, auquel un utilisateur (5) peut faire des entrées.

4. Procédé suivant la revendication 1, **caractérisé en ce que** les données (D) sont mémorisées de manière non chiffrée dans une mémoire (4) de données du deuxième module (2) et peuvent être lues par le premier module (1).

5. Procédé suivant la revendication 1, **caractérisé en ce que** les données (D) transmises de manière non sécurisée sont mémorisées dans une première partie d'une mémoire (6) du premier module (1).

6. Procédé suivant la revendication 1, **caractérisé en ce que**, pour la transmission sécurisée, on produit, pendant l'opération (IV) d'authentification, une clé (11) pour la transmission de données sécurisée par l'incorporation de laquelle il est produit, à partir des données (D) transmises par le deuxième module (2), au moins une donnée (CS) de contrôle, de sorte que le premier module (1) peut, à partir d'une exploitation de la donnée (CS) de contrôle et des données (D) transmises, déterminer l'authenticité des données (D).

7. Procédé suivant la revendication 6, **caractérisé en ce que** la clé (11) pour la transmission de données sécurisée est produite par le premier module (1).

8. Procédé suivant la revendication 1, **caractérisé en ce que** l'opération (IV) d'authentification se déroule comme processus en arrière plan.

9. Procédé suivant la revendication 1, **caractérisé en ce que** la transmission sécurisée et la détermination de l'authenticité des données (D) transmises s'effectuent comme processus en arrière plan.

10. Procédé suivant la revendication 1, **caractérisé en ce que** l'opération (IV) d'authentification et celle de la détermination de l'authenticité des données (D) transmises sont mémorisées d'une manière modifiable en tant que programmes pouvant être réalisés, au moins en partie dans une mémoire (6) du premier module (1).

11. Procédé suivant la revendication 1, **caractérisé en ce que**, pendant la transmission non sécurisée de données (D) et le traitement de ces données, certaines indications d'erreur qui se rapportent à la transmission non sécurisée sont supprimées du système.

12. Dispositif comprenant un premier module et un deuxième module, comprenant notamment un enregistreur (DTCO) de marche et un support (3) de données qui peut être raccordé à celui-ci,
dans lequel des données (D) sont transmises entre le premier module (1) et le deuxième module (2),
le dispositif étant constitué
- de façon à ce que le deuxième module (2) ait une mémoire (4) de données,
- de façon à ce que des données (D) puissent être transmises par le deuxième module (2) au premier module (1), soit d'une manière sécurisée, suivant une opération (VI) d'authentification, soit d'une manière non sécurisée,
- en ce qu'après la connexion du deuxième module (2) au premier module (1), des données (D) qui sont utilisées au moyen d'un processeur (CPU) du premier module (1) pour un premier processus (III) sont d'abord transmises d'une manière non sécurisée,
- de manière à ce que, après le début de la transmission non sécurisée, une transmission des données (D) sécurisée suivant l'opération (IV) d'authentification s'effectue du deuxième module (2) au premier module (1),
- de manière à ce que les données (D) transmises d'une manière non sécurisée soient comparées aux données (D) transmises de manière sécurisée et, si une différence est déterminée entre les données (D) transmises de manière sécurisée et les données (D) transmises de manière non sécurisée, des résultats provenant du premier processus (III) sont rejetés.

13. Dispositif suivant la revendication 12, **caractérisé en ce qu'**il est constitué, au moyen des données (D) lues de manière non sécurisée, une entrée de données (D) supplémentaires est assistée pendant le premier processus (III) au moyen d'un troisième module (dispositif 9 d'entrée).

14. Dispositif suivant la revendication 13, **caractérisé en ce que** le troisième module est constitué sous la forme d'un dispositif (9) d'entrée, auquel un utilisateur (5) peut faire des entrées.

15. Dispositif suivant la revendication 12, **caractérisé en ce que** le deuxième module (2) comporte une mémoire (4) de données, dans lequel les données sont mémorisées d'une manière non chiffrée et le dispositif est constitué de manière à ce que les données (D) puissent être lues par le premier module (1).

16. Procédé suivant la revendication 12, **caractérisé en ce que** le premier module (1) comporte une mémoire (6) ayant une première partie et l'agencement est constitué de manière à ce que les données (D) transmises de manière non sécurisée soient mémorisées dans la première partie.

17. Procédé suivant la revendication 12, **caractérisé en ce qu'**il est constitué de manière à produire, pour la transmission sécurisée pendant l'opération (IV) d'authentification, une clé (11) pour la transmission de données sécurisée, par l'incorporation de laquelle il est produit à partir des données (D) transmises par le deuxième module (2), au moins une donnée (CS) de contrôle, de sorte que le premier module (1) peut, à partir d'une exploitation de la donnée (CS) de contrôle et des données (D) transmises, déterminer l'authenticité des données (D).

18. Procédé suivant la revendication 12, **caractérisé en ce qu'**il est constitué de manière à ce que l'authentification s'effectue sous la forme d'un processus en arrière plan.

19. Procédé suivant la revendication 12, **caractérisé en ce qu'**il est constitué de manière à ce que la transmission sécurisée et la détermination de l'authenticité des données (D) transmises s'effectuent comme processus en arrière plan.

20. Procédé suivant la revendication 12, **caractérisé en ce qu'**il est constitué de manière à ce que l'opération (IV) d'authentification et celle de la détermination de l'authenticité des données (D) transmises soient mémorisées d'une manière modifiable, en tant que programme pouvant être réalisé, au moins en partie dans une mémoire (6) du premier module (1).

21. Procédé suivant la revendication 12, **caractérisé en ce qu'**il est constitué de manière à ce que, pendant la transmission non sécurisée de données (D) et le traitement de ces données, certaines indications d'erreur qui se rapportent à la transmission non sécurisée soient supprimées du système.
